# EUROPEAN PATENT APPLICATION

(11) **EP 4 603 743 A1**
(43) Date of publication of application: **20.08.2025**
(21) Application number: 23914770.5
(22) Date of filing: 19.12.2023
(51) Int. Cl.: F21S 2/00, G02B 5/02, G02B 5/04, G02F 1/1335, G02F 1/13357

(54) **EDGE LIGHT TYPE BACKLIGHT UNIT, LIQUID CRYSTAL DISPLAY DEVICE, AND INFORMATION APPARATUS**

(30) Priority: 06.01.2023 JP 2023000931
(71) Applicant: KEIWA Incorporated, Tokyo 103-0025 (JP)
(72) Inventor: SASA Kenta, Tokyo 103-0025 (JP)
(74) Representative: Becker Kurig & Partner Patentanwälte mbB
(86) International application number: PCT/JP2023/045487
(87) International publication number: WO 2024/147283

(57) **Abstract**

An edge light type backlight unit (40) comprises: a light guide plate (43) that guides light incident to one end toward the opposite end side; a light refraction sheet (44) stacked on one surface of the light guide plate (43); and light diffusion layers (45, 46) stacked on the light refraction sheet. A first surface of the light refraction sheet (44) comprises a plurality of recessed portions (44c) formed in a substantially inverted polygonal pyramid shape or a substantially inverted truncated polygonal pyramid shape. A second surface of the light refraction sheet (44) comprises a plurality of grooves formed in an adjoining manner and having an isosceles triangle cross section.

## Description

### Technical Field

The present disclosure relates to an edge light type backlight unit, a liquid crystal display device, and an information apparatus.

### Background Art

A display device such as a liquid crystal display device used in a liquid crystal display, VR (Virtual Reality) goggles, or the like includes a display panel and a backlight unit disposed on the back side of the display panel. Backlight units include types such as an edge light type and a direct type. An edge light type backlight unit includes a light guide plate, a light source that inputs light into an end portion of the light guide plate, and an optical sheet stacked on the light guide plate. The optical sheet serves to change the angle of the light from the light source, diffuse the light, and so on, and may be constituted by a plurality of layers. Furthermore, a light-diffusing agent such as resin beads, for example, is used on the optical sheet for the purpose of light diffusion.

### Citation List

### Patent Literature

Patent Literature 1: Japanese Patent Application Publication No. 2022-052493

### Summary of Invention

### Technical Problem

A backlight unit is required to make the entire screen of the display device emit light uniformly and with high brightness. Conventionally, there is a trade-off relationship between improving the brightness and the brightness uniformity.

An object of the present disclosure is to provide an edge light type backlight unit that achieves improved brightness while maintaining brightness uniformity, as well as a liquid crystal display device and an information apparatus including the edge light type backlight unit. Solution to Problem

An edge light type backlight unit of the present disclosure includes a light guide plate configured to guide light entering through one end portion to an end portion side on the opposite side, a light-refracting sheet stacked on one surface of the light guide plate, and a light-diffusing layer stacked on the light-refracting sheet. A first surface of the light-refracting sheet includes a plurality of recesses formed in an inverted substantially polygonal pyramid shape or an inverted substantially polygonal truncated pyramid shape. A second surface of the light-refracting sheet includes a plurality of groove lines formed adjacent to each other and having an isosceles triangle-shaped cross-section.

According to the edge light type backlight unit of the present disclosure, by providing the light-refracting sheet between the light-diffusing layer and the light source layer having the light guide plate, the brightness can be improved while maintaining uniformity. The reason for this is that the light-refracting sheet refracts the light entering through the end portion of the light guide plate toward the light-diffusing layer side, and as a result, the light can enter the light-diffusing layer at a desired angle.

Note that the groove lines provided in the second surface of the light-refracting sheet may be parallel to the direction of the light entering the light guide plate.

The recesses provided on the first surface of the light-refracting sheet may be formed in an inverted substantially square pyramid shape or a substantially square truncated pyramid shape with a rectangular or square base, and ridge lines partitioning the adjacent recesses may form an angle of 30° or more and 60° or less with respect to the direction of the light entering the light guide plate.

According to these configurations, a pronounced brightness improvement effect is obtained.

The light-diffusing layer may include a first light-diffusing sheet and a second light-diffusing sheet, and the first light-diffusing sheet may be located closer to the light guide plate side than the second light-diffusing sheet. Additionally, each of the first light-diffusing sheet and the second light-diffusing sheet may include a plurality of groove lines formed adjacent to each other on a surface on the opposite side to the light guide plate and having an isosceles triangle-shaped cross-section, the groove lines in the first light-diffusing sheet may be orthogonal to the direction of the light entering the light guide plate, and the groove lines in the second light-diffusing sheet may be parallel to the direction of the light entering the light guide plate.

This configuration may be employed as a desirable example configuration of the light-diffusing layer that is combined with the light-refracting sheet of the present disclosure.

The second surface of the light-refracting sheet is preferably on the light guide plate side. Thus, a pronounced brightness improvement effect is obtained.

The apex angle of the recesses formed in the light-refracting sheet may be 80° or more and 100° or less. This angle is preferable in order to achieve a pronounced brightness improvement effect.

The groove lines provided in the second surface of the light-refracting sheet may form an angle of 5° or more and 10° or less with respect to the direction of the light entering the light guide plate. Further, the groove lines provided in the second surface of the light-refracting sheet may be formed in a repeatedly curved wave shape.

These configurations are useful to suppress the occurrence of Moire in the edge light type backlight unit.

A liquid crystal display device according to the present disclosure includes the edge light type backlight unit of the present disclosure, and a liquid crystal display panel.

Since the liquid crystal display device of the present disclosure includes the edge light type backlight unit described above, the brightness can be improved while maintaining light emission uniformity over the entire screen.

An information apparatus according to the present disclosure includes the liquid crystal display device of the present disclosure.

Since the information apparatus of the present disclosure includes the liquid crystal display device described above, the brightness can be improved while maintaining light emission uniformity over the entire screen.

### Advantageous Effects of Invention

According to the techniques of the present disclosure, it is possible to realize improved brightness while maintaining brightness uniformity in an edge light type backlight unit as well as a liquid crystal display device and an information apparatus that use the edge light type backlight unit.

### Brief Description of Drawings

[FIG. 1]

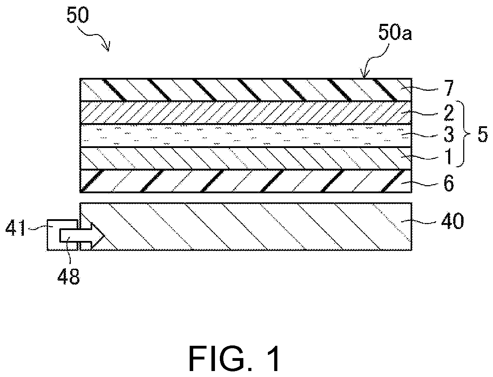

   FIG. 1 is a schematic sectional view showing an example of a liquid crystal display device according to an embodiment.
[FIG. 2]

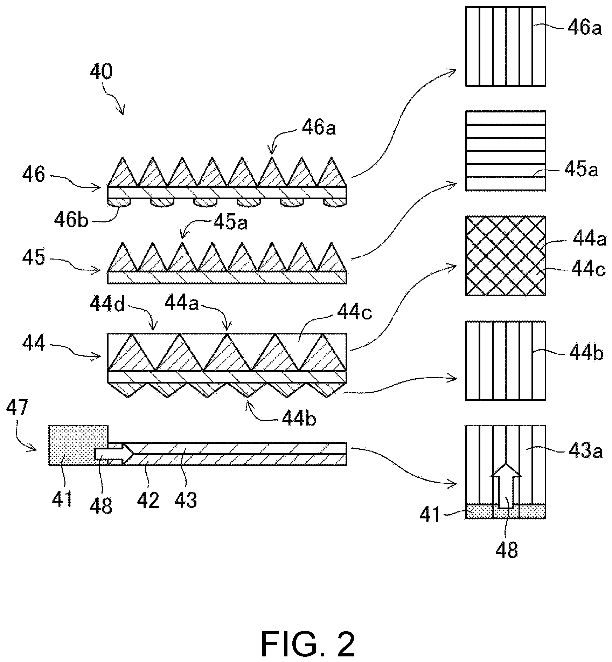

   FIG. 2 is a schematic sectional view and a schematic plan view illustrating a configuration of a backlight unit according to the embodiment.
[FIG. 3]

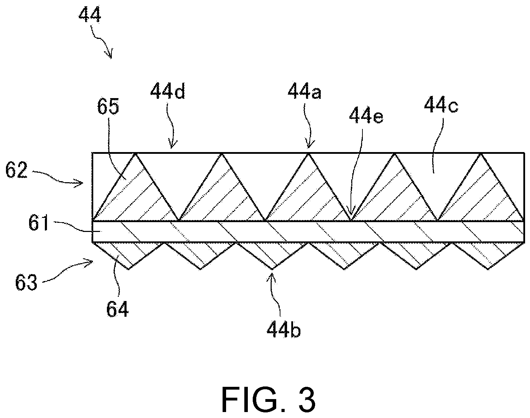

   FIG. 3 is a schematic sectional view of a light-refracting sheet according to the embodiment.
[FIG. 4]

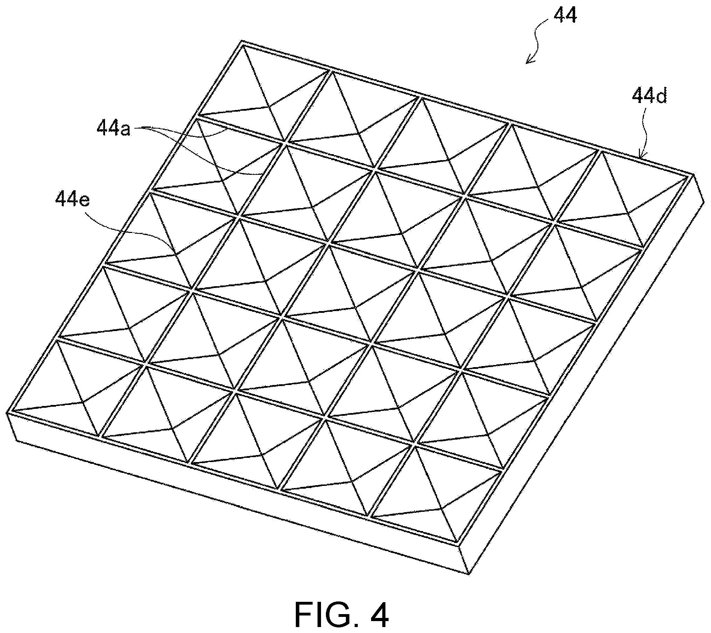

   FIG. 4 is a perspective view showing an inverted pyramid layer of the light-refracting sheet according to the embodiment.
[FIG. 5]

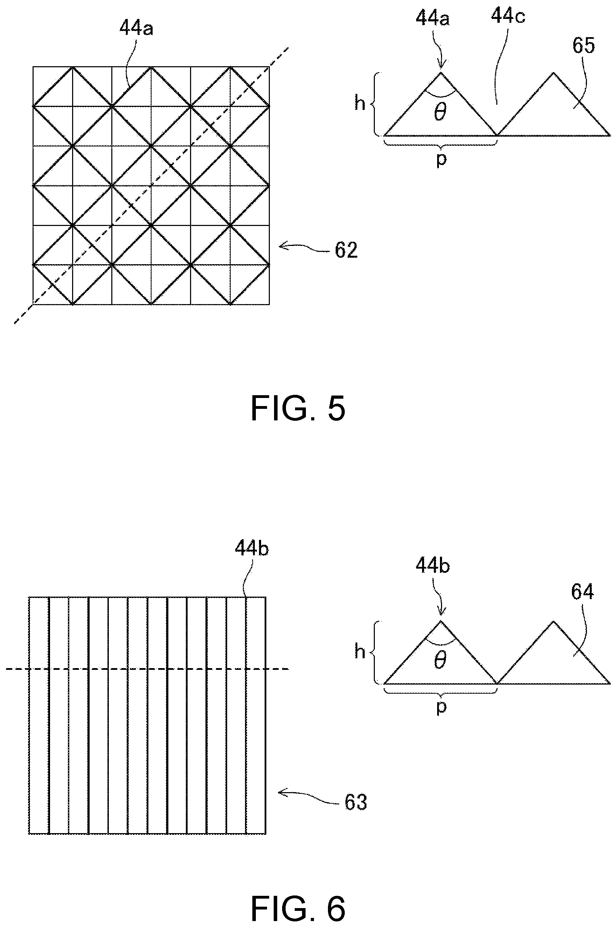

   FIG. 5 is a view illustrating the shape of the inverted pyramid layer of the light-refracting sheet according to the embodiment.
[FIG. 6]
   FIG. 6 is a view illustrating the shape of a prism layer of the light-refracting sheet according to the embodiment.
[FIG. 7]

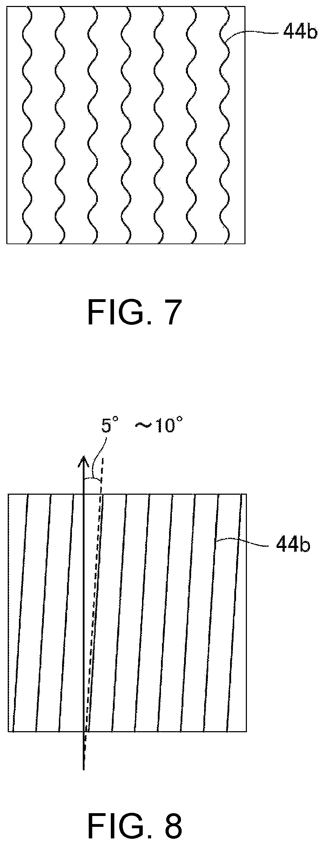

   FIG. 7 is a view illustrating a structure for suppressing Moire in the light-refracting sheet according to the embodiment.
[FIG. 8]
   FIG. 8 is a view illustrating another structure for suppressing Moire in the light-refracting sheet according to the embodiment.

### Description of Embodiments

### (Embodiment)

An embodiment of the present disclosure will be described below with reference to the drawings. It should be noted that the scope of the present disclosure is not limited to the embodiment described below, and any modifications can be made without departing from the scope of the technical ideas of the present disclosure.

### <Liquid crystal display device>

As shown in FIG. 1, a liquid crystal display device 50 according to this embodiment includes a liquid crystal display panel 5, a first polarizing plate 6 adhered to a lower surface of the liquid crystal display panel 5, a second polarizing plate 7 adhered to an upper surface of the liquid crystal display panel 5, and a backlight unit 40 provided on the back surface side of the liquid crystal display panel 5 via the first polarizing plate 6.

The liquid crystal display panel 5 includes a TFT substrate 1 and a CF substrate 2, which are provided so as to face each other, a liquid crystal layer 3 provided between the TFT substrate 1 and the CF substrate 2, and a sealing material (not shown) provided in a frame shape between the TFT substrate 1 and the CF substrate 2 in order to seal the liquid crystal layer 3.

The backlight unit 40 is an edge light type backlight unit that guides light 48 emitted substantially parallel to the liquid crystal display panel 5 by a light source 41 provided on an end portion toward the liquid crystal display panel 5 side.

The shape of a display screen 50a of the liquid crystal display device 50 as seen from the front (above in FIG. 1) is generally rectangular or square, but the shape is not limited thereto and may be any desired shape, such as a rectangular shape with rounded corners, an elliptical, circular, or trapezoidal shape, or the shape of an instrument panel for an automobile.

In the liquid crystal display device 50, a voltage of a predetermined magnitude is applied to the liquid crystal layer 3 in each sub-pixel corresponding to each pixel electrode in order to change the alignment state of the liquid crystal layer 3. Thus, the transmittance of light that enters from the backlight unit 40 through the first polarizing plate 6 is adjusted. The light having the adjusted transmittance is emitted through the second polarizing plate 7, whereby an image is displayed.

The liquid crystal display device 50 according to this embodiment is used as a display device built into any of various information apparatuses (for example, an in-vehicle device for car navigation or the like, a personal computer, a mobile phone, a portable information terminal such as a laptop computer or a tablet, a portable game machine, a copy machine, a ticket vending machine, an automated teller machine, VR goggles, or the like).

For example, the TFT substrate 1 includes a plurality of TFTs provided in a matrix pattern on a glass substrate, an interlayer insulating film provided so as to cover the TFTs, a plurality of pixel electrodes provided in a matrix pattern on the interlayer insulating film and respectively connected to the plurality of TFTs, and an alignment film provided so as to cover the pixel electrodes. For example, the CF substrate 2 includes a black matrix provided in a grid pattern on a glass substrate, a color filter including a red layer, a green layer, and a blue layer respectively provided between the grids of the black matrix, a common electrode provided so as to cover the black matrix and the color filter, and an alignment film provided so as to cover the common electrode. The liquid crystal layer 3 is constituted by a nematic liquid crystal material or the like containing liquid crystal molecules with electro-optic characteristics. For example, the first polarizing plate 6 and the second polarizing plate 7 include a polarizer layer with a polarizing axis in one direction and a pair of protection layers provided so as to sandwich the polarizer layer.

### <Backlight unit>

FIG. 2 shows an example configuration of the backlight unit 40 according to the embodiment.

The left cross-sectional view of FIG. 2 shows that the backlight unit 40 includes a light source layer 47, a light-refracting sheet 44, a first light-diffusing sheet 45, and a second light-diffusing sheet 46, which are stacked in that order. Note, however, that large gaps are shown between the layers in order to make the drawing easier to see. In other words, in the backlight unit 40, the layers are substantially in contact with each other. Moreover, the cross-sections of each of the layers are shown schematically, but as will be described below, some of the layers are cut in different directions. Note that in FIG. 3, the light-refracting sheet 44 is shown singly and in enlarged form.

The first light-diffusing sheet 45 and the second light-diffusing sheet 46 diffuse light from the light source layer 47, thereby contributing to high brightness and uniform light emission over the entire surface of the liquid crystal display panel 5. Note that in order to exhibit the function of the light-diffusing sheets, it is desirable that the light enters at an angle within a prescribed range.

However, since the light source layer 47 is an edge light type in which the light source 41 is provided on an end portion thereof, the light emitted from the light source layer 47 is at an angle close to parallel to the light source layer 47. Therefore, if the first light-diffusing sheet 45 and the second light-diffusing sheet 46 are provided directly on the light source layer 47, the light may not enter the light-diffusing sheets 45 and 46 at the desired angle. As a result, the light is less likely to be diffused appropriately, which leads to reductions in the uniformity and brightness.

Hence, the light-refracting sheet 44 is disposed between the light source layer 47 and the first light-diffusing sheet 45. The light-refracting sheet 44 refracts the light emitted from the light source layer 47 to the first light-diffusing sheet 45 side so that the light enters the first light-diffusing sheet 45 and the second light-diffusing sheet 46 at the desired angle. Thus, the backlight unit 40 achieves uniform and high-brightness light emission.

The right side of FIG. 2 shows schematic plan views of the respective stacked layers as seen from a perpendicular direction (the up-down direction in FIG. 2). These plan views are shown in accordance with the orientations in which the layers are actually stacked in the backlight unit 40. Individual elements will be described in detail later, but first, the orientation of each of the stacked layers will be described, as follows. First, the extension direction of a lenticular lens 43a in the light source layer 47, the emission direction of the light 48 from the light source 41, and the direction of ridge lines 44b on a prism layer 63 of the light-refracting sheet 44 are respectively parallel to each other. Further, ridge lines 44a on an inverted pyramid layer 62 of the light-refracting sheet 44 form an angle of 45° relative to the ridge lines 44b of the prism layer 63. Furthermore, ridge lines 45a of prisms on the first light-diffusing sheet 45 and ridge lines 45b of prisms on the second light-diffusing sheet 46 are orthogonal to each other, and the ridge lines 45a are orthogonal to the ridge lines 44b on the prism layer 63 of the light-refracting sheet 44.

It should be noted that the terms "parallel" and "orthogonal" as used herein include not only strictly geometrically parallel and orthogonal, but also substantially parallel and orthogonal within the range of industrial error or a range in which the actions and effects of the present invention are not lost. For example, it is permissible for an angle formed by two directions to deviate from 0° (in the case of parallel) or 90° (in the case of orthogonal). The deviation is preferably 10° or less.

The constituent elements are described further below.

### <Light source layer>

The light source layer 47 includes a reflective sheet 42, a light guide plate 43 stacked thereon, and the light source 41. The light source 41 inputs the light 48 through an end portion of the light guide plate 43 more or less parallel to the light guide plate 43. The light guide plate 43 guides the light 48 toward the opposite side to the light source 41 and emits the light 48 onto the liquid crystal display panel 5 side at a comparatively small angle relative to the surface of the light guide plate 43. The reflective sheet 42 reflects light that is about to exit to the opposite side to the liquid crystal display panel 5 so as to direct the light to the liquid crystal display panel 5 side.

The reflective sheet 42 is constituted by a white polyethylene terephthalate resin film, a silver vapor-deposited film, or the like, for example. The light guide plate 43 may also be a lenticular lens sheet made of, for example, polycarbonate, polyethylene terephthalate, acrylic resin, or the like. In this case, each lenticular lens 43a (see the plan view of FIG. 2) preferably extends in the entrance direction of the light 48. Note that when the light guide plate 43 (and therefore the display screen 50a) is rectangular, the entrance direction of the light 48 is normally perpendicular to the side on which the light source layer 47 is provided. Although the light 48 is emitted from the light source 41 with a certain spread, the entrance direction thereof may be considered as the direction in which the center of the light 48 is oriented.

It should be noted that the term "sheet", such as the light-refracting sheet and the light diffusing sheet, generally refers to a comparatively thin, flat shape, and includes a plate-shaped component, a film-shaped component, or the like.

The type of the light source 41 is not particularly limited, and for example, an LED element, a laser element, or the like may be used, while from the perspectives of cost, productivity, and so on, an LED element may be used. When an LED element is used, the LED element may include a plurality of LED chips.

### <Light-refracting sheet>

A first surface of the light-refracting sheet 44 (the surface on the light source layer 47 side at the bottom of FIG. 2) includes a plurality of recesses formed in an inverted substantially polygonal pyramid shape or an inverted substantially polygonal truncated pyramid shape. A second surface of the light-refracting sheet 44 includes a plurality of groove lines formed adjacent to each other and having an isosceles triangle-shaped cross-section. As an example, the light-refracting sheet 44 of this embodiment, which is shown singly and in enlarged form in FIG. 3, includes a base material layer 61, the inverted pyramid layer 62, which is provided on one surface (a first surface) of the base material layer 61, and the prism layer 63, which is provided on the other surface (a second surface) of the base material layer 61. In the example of this embodiment, the prism layer 63 is provided on the light source layer 47 side, and the inverted pyramid layer 62 is provided on the opposite side thereto.

The overall thickness of the light-refracting sheet 44 is around 50 µm or more and 300 µm or less.

### [Base material layer]

The base material layer 61 is required to transmit light and is therefore formed using a transparent (e.g., colorless and transparent) synthetic resin as the main component. The main component of the base material layer 61 is not particularly limited, and for example, polycarbonate, polyethylene terephthalate, polyethylene naphthalate, acrylic resin, polystyrene, polyolefin, cellulose acetate, weather-resistant vinyl chloride, or the like may be used. Note that the term "main component" refers to the component having the highest content, for example, a component having a content of 50% by mass or more. The base material layer 61 may contain a diffusing agent or other additives, or may contain substantially no additives. The additives that can be included are not particularly limited, and may be inorganic particles of silica, titanium oxide, aluminum hydroxide, barium sulfate, or the like, for example, or organic particles of acrylic, acrylonitrile, silicone, polystyrene, polyamide, or the like, for example.

The lower limit of the average thickness of the base material layer 61 is preferably around 10 µm, more preferably around 35 µm, and even more preferably around 50 µm. The upper limit of the average thickness of the base material layer 61 is preferably around 500 µm, more preferably around 250 µm, and even more preferably around 180 µm.

When the average thickness of the base material layer 61 is less than the lower limit, curling may occur when the inverted pyramid layer 62 and the prism layer 63 are formed. Conversely, when the average thickness of the base material layer 61 exceeds the upper limit, the brightness of the liquid crystal display device 50 may decrease, and it may be difficult to respond to demand to make the liquid crystal display device 50 thinner. It should be noted that term "average thickness" refers to an average value of the thickness at any ten points.

### [Prism layer]

The prism layer 63 is configured such that a plurality of groove lines with an isosceles triangle-shaped cross-section are provided adjacent to each other, and prisms 64 are formed from triangular column parts sandwiched between adjacent pairs of groove lines. Further, the prism layer 63 may be formed using UV-curable acrylic resin, for example.

Furthermore, the triangular column-shaped prisms 64 are arranged so as to extend in the same direction as the extension direction of the lenticular lenses 43a of the light source layer 47. This also matches the direction in which the light 48 is emitted from the light source layer 47 in the light source layer 47. In the plan view of FIG. 2, this direction is indicated by the ridge lines 44b of the prisms 64.

FIG. 6 shows the shape of the prisms 64. FIG. 6 shows a plan view of the prism layer 63 and a cross-sectional view perpendicular to the ridge lines 44b (the position of the cross-section is illustrated by a dotted line). Each individual prism 64 is an isosceles triangle, and the side thereof on the base material layer 61 side (the lower side in FIG. 6) forms the base. The shape of the prism 64 can be expressed by a height h, a pitch p, and an apex angle θ.

The height h of the prism 64 is preferably around 8 µm or more and 100 µm or less. The pitch p of the prisms 64 is preferably around 15 µm or more and 200 µm or less. The apex angle θ of the prism 64 is preferably around 60° or more and 120° or less, and more preferably around 80° or more and 100° or less.

Note that in FIG. 6 and so on, the prisms 64 are shown as geometrically strict isosceles triangles, and adjacent prisms 64 are shown to be in contact with each other. However, a different shape from the example illustrated in FIG. 6 may be used as long as the actions and effects of the present invention are not lost, or within the range of inevitable shape variability due to machining accuracy during industrial production. For example, the apex (the ridge line 44b) part may be rounded, or the prism 64 may have a flat trapezoidal shape. In this case, the apex angle θ is the angle formed when the sides of an imaginary triangle are extended. Furthermore, adjacent prisms 64 may be arranged with a small gap therebetween. In this case, the length of the base of the triangle does not match the pitch p.

### [Inverted pyramid layer]

The inverted pyramid layer 62 is provided with a plurality of recesses 44c having an uneven shape, for example an inverted substantially polygonal pyramid shape (in this example, an inverted substantially square pyramid shape (an inverted pyramid shape)), for diffusing light. The inverted pyramid layer 62 is required to transmit light rays and may therefore be formed using a transparent (e.g., colorless transparent) synthetic resin as the main component. For example, the inverted pyramid layer 62 may be integrally molded with the base material layer 61 during extrusion molding of a base material resin that is to serve as the base material layer 61, or may be molded separately using a UV-curable resin or the like after molding the base material layer 61.

As shown in FIG. 4, for example, the plurality of recesses 44c may be arranged in a two-dimensional matrix pattern. In other words, the plurality of recesses 44c may be arranged along two mutually orthogonal directions. Adjacent recesses 44c are partitioned by the ridge lines 44a. The ridge lines 44a extend along the two directions in which the recesses 44c are arranged. The arrangement pitch of the recesses 44c may be, for example, around 50 µm or more and around 500 µm or less. A center 44e of the recess 44c (the apex of the inverted pyramid) is the deepest part of the recess 44c. The center 44e (the deepest part) of the recess 44c may reach the surface of the base material layer 61. In other words, the depth of the recess 44c may be equal to the thickness of the inverted pyramid layer 62. Note that although FIG. 4 illustrates a state in which the recesses 44c are arranged in a 5×5 matrix pattern for the sake of simplicity, the actual number of arranged recesses 44c is significantly larger.

In this embodiment, the recess 44c has a square pyramid shape with a square base. Further, the ridge lines 44a in the inverted pyramid layer 62 form an angle of 45° relative to the ridge lines 44b in the prism layer 63. Note that although 45° is the desired angle, the angle is not limited thereto. To enhance the brightness improvement effect, it is desirable that the ridge line 44a and the ridge line 44b form an angle rather than being parallel, and this angle is preferably 30° or more and 60° or less, and more preferably 40° or more and 50° or less.

The shape of the inverted pyramid layer 62 is shown in FIG. 5. FIG. 5 shows a plan view of the inverted pyramid layer 62 and a cross-sectional view that is perpendicular to the ridge line 44b and passes through the center 44e of the recess 44c (the position of the cross-sectional view is illustrated by a dotted line). In this cross-section, remaining portions 65 remaining after the recesses 44c have been removed are isosceles triangles, and the side thereof on the base material layer 61 side (the lower side in FIG. 6) forms the base. The shape of the remaining portion 65, similarly to the prism 64 of the prism layer 63, can be expressed by the height h, the pitch p, and the apex angle θ.

The height h of the remaining portion 65 is preferably around 10 µm or more and 200 µm or less. The pitch p of the remaining portions 65 is preferably around 20 µm or more and 400 µm or less. The apex angle θ of the remaining portion 65 is preferably around 60° or more and 150° or less, and more preferably around 80° or more and 100° or less.

Note that in this embodiment, the inverted pyramid-shaped (inverted substantially square pyramid-shaped) recesses 44c are arranged in a two-dimensional matrix pattern in order to provide an uneven shape, but as long as the actions and effects of the present invention are not lost, the recesses 44c may be arranged randomly. When the recesses 44c are regularly arranged two-dimensionally, a gap may be, but does not have to be, provided between the recesses 44c. The recess 44c may have another inverted substantially polygonal pyramid shape different from the inverted substantially square pyramid shape. For example, the "inverted polygonal pyramid" shape of the recess 44c may be an inverted triangular pyramid or an inverted hexagonal pyramid that can be arranged two-dimensionally without gaps, similarly to an inverted square pyramid.

When the "inverted polygonal pyramid" shape of the recess 44c is an inverted square pyramid, it is easy to improve the accuracy of a surface cutting operation of a metal mold (a metal roll) used in a manufacturing process, such as extrusion molding or injection molding, for providing the recesses 44c.

Furthermore, while the term "inverted substantially polygonal pyramid" is used in the present disclosure in consideration of the fact that it is difficult to form geometrically strict inverted polygonal pyramid-shaped recesses using ordinary shape transfer techniques, it is assumed that the term "inverted substantially polygonal pyramid" includes shapes that can be regarded as a truly or substantially inverted polygonal pyramid. In addition, the term "substantially" means "can be approximated" such that, for example, an "inverted substantially square pyramid" refers to a shape that can approximate an inverted square pyramid. For example, likewise with regard to an "inverted polygonal truncated pyramid" having a flat top, as long as the actions and effects of the present invention are not lost, a shape having a small top area is also assumed to be included as an "inverted substantially polygonal pyramid". Furthermore, shapes that are deformed from an "inverted polygonal pyramid" within the range of inevitable shape variability due to machining accuracy in industrial production are also assumed to be included as an "inverted substantially polygonal pyramid".

### <Light-diffusing layer>

The first light-diffusing sheet 45 and the second light-diffusing sheet 46 are provided on the light-refracting sheet 44 as a light-diffusing layer. Each of the light-diffusing sheets is configured such that a plurality of groove lines with an isosceles triangle-shaped cross-section are provided adjacent to each other, and prisms are formed from triangular column parts sandwiched between adjacent pairs of groove lines. A PET (polyethylene terephthalate) film in which prism shapes have been formed using a UV-curable acrylic resin, for example, may be used as the light-diffusing sheets 45 and 46.

As shown on the cross-sectional view in FIG. 2, the first and second light-diffusing sheets 45 and 46 are arranged such that the side on which the prisms are provided faces the opposite side to the light source layer 47.

Further, as shown on the plan view in FIG. 2, the first light-diffusing sheet 45 is arranged so that the ridge lines 45a of the prisms are orthogonal to the ridge lines 44b of the prisms on the light-refracting sheet 44. In the second light-diffusing sheet 46, the ridge lines 45b of the prisms are arranged parallel to the ridge lines 44b of the prisms on the light-refracting sheet 44. Accordingly, the first and second light-diffusing sheets 45 and 46 are arranged such that the respective ridge lines 45a and 45b thereof are orthogonal to each other.

Note that it is preferable to use the two light-diffusing sheets 45 and 46, as described above, as the light-diffusing layer, but not essential. Only one light-diffusing sheet or three or more light-diffusing sheets can be used, or a light-diffusing sheet having a structure different from a sheet provided with prisms may be used.

Furthermore, protrusions 46b may be provided on the back surface (the light source layer 47 side) of the second light-diffusing sheet 46. The protrusions 46b may have a shape resembling part of a sphere, for example.

### Examples

Examples differing mainly in the configuration of the light-refracting sheet 44 and a comparative example using a different optical sheet from the light-refracting sheet 44 of this embodiment will be described below. The brightness in each example is measured using a brightness meter in the state of the backlight unit 40 configured as shown in FIG. 2, and is represented by a relative value with the comparative example serving as a reference (100%).

### <Apex angle and base material of inverted pyramid layer>

Examples 1 to 4 and the comparative example, to be described below, are also shown on Table 1. On Table 1, the first surface refers to the surface of the light-refracting sheet 44 of each example (and the optical sheet of the comparative example) on the opposite side to the light source layer 47, and the second surface refers to the surface on the light source layer 47 side.

### (Example 1)

In the light-refracting sheet 44 of example 1, the pitch p of the remaining portions 65 on the inverted pyramid layer 62 serving as the first surface is 100 µm, the height h is 50 µm, and the apex angle θ is 90°. Here, if the remaining portions 65 having a strictly geometrical isosceles triangle shape are provided adjacent to each other without gaps, as shown in FIG. 5, these numerical values are not obtained. As described above, however, shape deformation and gaps between the remaining portions 65 are permitted, and therefore these numerical values can be obtained (likewise in the following examples; the same also applies to the prism layer 63).

Further, the base material layer 61 is made of polyethylene terephthalate (PET) and has a thickness of 75 µm.

Furthermore, the pitch p of the prisms 64 on the prism layer 63 serving as the second surface is 100 µm, the height h is 50 µm, and the apex angle θ is 90°.

The inverted pyramid layer 62 and the prism layer 63 are both made of a UV-curable resin (described as UV resin on Table 1).

As regards the light-refracting sheet 44 of example 1, the actual total thickness is 169 µm. The reason why this value does not match the sum of the height of the remaining portion 65, the thickness of the base material layer 61, and the height of the prism layer 63, as described above, is that the individual dimensions are design values, whereas the total thickness is an actual dimension. In other words, the cause of the mismatch is variation in the thickness of the base material layer 61, manufacturing variation in the inverted pyramid layer 62 and the prism layer 63, and so on, and the same also applies to the examples and so on described below.

In example 1, the brightness, using the comparative example as a reference, was 126.0%.

### (Example 2)

Example 2 is similar to example 1 except that the base material layer 61 is formed from polycarbonate (PC) with a thickness of 100 µm. The total thickness of the light-refracting sheet 44 of example 2 is 195 µm. In example 2, the brightness was 125.0%.

### (Example 3)

The light-refracting sheet 44 of example 3 is similar to that of example 1 except for the following points. That is, with regard to the remaining portions 65 of the inverted pyramid layer 62, the pitch p is 275 µm, the height h is 50 µm, and the apex angle θ is 140°. The total thickness of the light-refracting sheet 44 is 168 µm. In example 3, the brightness was 110.0%.

### (Example 4)

The light-refracting sheet 44 of example 4 is similar to that of example 2 except for the following points. That is, with regard to the remaining portions 65 of the inverted pyramid layer 62, the pitch p is 275 µm, the height h is 50 µm, and the apex angle θ is 140°. The total thickness of the light-refracting sheet 44 is 196 µm. In example 4, the brightness was 103.8%.

### (Comparative example)

In the comparative example, an optical sheet having a different structure is used instead of the light-refracting sheet 44 of this embodiment. The base material layer is made of PET with a thickness of 38 µm, and the first and second surfaces are both coated with a coating containing beads made of a thermosetting resin.

### (Comparison of examples)

As shown on Table 1, in all of examples 1 to 4, the brightness improves as compared with the comparative example. Further, in examples 1 and 2, in which the apex angle θ of the inverted pyramid layer 62 is 90°, the effect is more pronounced than in examples 3 and 4, in which the apex angle θ is 140°.

Focusing on differences in the base material layer 61 in a case where the shape remains the same, the brightness is higher in examples 1 and 3, in which PET is used, than in examples 2 and 4, in which PC is used. Specifically, there is a clear difference between examples 3 and 4, in which the apex angle θ is 140°.

Further, the uniformity of light emission was approximately the same in examples 1-4 and the comparative example. Note that the brightness uniformity was evaluated from variation in the brightness measured in a plurality of locations on the light emission surface.

**[Table 1]**

| | | EXAMPLE 1 | EXAMPLE 2 | EXAMPLE 3 | EXAMPLE 4 | COMPARATIVE EXAMPLE |
|---|---|---|---|---|---|---|
| FIRST SURFACE | SHAPE | INVERTED PYRAMID A | INVERTED PYRAMID A | INVERTED PYRAMID B | INVERTED PYRAMID B | BEAD COATING D |
| | p(µm) / h(µm) / θ | 100 / 50 / 90° | 100 / 50 / 90° | 275 / 50 / 140° | 275 / 50 / 140° | |
| | MATERIAL | UV RESIN | UV RESIN | UV RESIN | UV RESIN | THERMOSETTING RESIN |
| BASE MATERIAL LAYER MATERIAL/THICKNESS (µm) | | PET / 75 | PC / 100 | PET / 75 | PC / 100 | PET / 38 |
| SECOND SURFACE | SHAPE | PRISM C | PRISM C | PRISM C | PRISM C | BEADS COATING E |
| | p(µm) / h(µm) / θ | 100 / 50 / 90° | 100 / 50 / 90° | 100 / 50 / 90° | 100 / 50 / 90° | |
| | MATERIAL | UV RESIN | UV RESIN | UV RESIN | UV RESIN | THERMOSETTING RESIN |
| TOTAL THICKNESS (µm) | | 169 | 195 | 168 | 196 | 50 |
| BRIGHTNESS (RELATIVE VALUE) | | 126.0% | 125.0% | 110.0% | 103.8% | 100% |

### <Pitch and height of inverted pyramid layer and prism layer>

Examples 5 to 7, described below, are also shown on Table 2. Likewise in this case, the brightnesses are values based on the comparative example shown on Table 1.

### (Example 5)

In the light-refracting sheet 44 of example 5, the pitch p of the remaining portions 65 on the inverted pyramid layer 62 is 100 µm, the height h is 50 µm, and the apex angle θ is 90°. The base material layer 61 is made of polyethylene terephthalate (PET) and has a thickness of 75 µm. The pitch p of the prisms 64 on the prism layer 63 is 100 µm, the height h is 50 µm, and the apex angle θ is 90°. The total thickness is 169 µm. In example 5, the brightness was 122.1%.

### (Example 6)

In the light-refracting sheet 44 of example 6, the pitch p of the remaining portions 65 on the inverted pyramid layer 62 is 40 µm, the height h is 20 µm, and the apex angle θ is 90°. The base material layer 61 is made of polyethylene terephthalate (PET) and has a thickness of 50 µm. The pitch p of the prisms 64 on the prism layer 63 is 24 µm, the height h is 12 µm, and the apex angle θ is 90°. The total thickness is 83 µm. In example 6, the brightness was 121.8%.

### (Example 7)

In the light-refracting sheet 44 of example 7, the pitch p of the remaining portions 65 on the inverted pyramid layer 62 is 40 µm, the height h is 20 µm, and the apex angle θ is 90°. The base material layer 61 is made of polyethylene terephthalate (PET) and has a thickness of 50 µm. The pitch p of the prisms 64 on the prism layer 63 is 24 µm, the height h is 12 µm, and the apex angle θ is 90°. The total thickness is 82 µm. In example 6, the brightness was 123.8%.

### (Comparison of examples)

In all of examples 5 to 7, in which the sizes (the pitch p and the height h) of the prisms 64 and the remaining portions 65 are different, the brightness is significantly improved as compared with the comparative example.

**[Table 2]**

| | | EXAMPLE 5 | EXAMPLE 6 | EXAMPLE 7 |
|---|---|---|---|---|
| INVERTED PYRAMID LAYER | PITCH | 100 µm | 40 µm | 40 µm |
| | HEIGHT | 50 µm | 20 µm | 20 µm |
| | APEX ANGLE | 90° | 90° | 90° |
| BASE MATERIAL LAYER | THICKNESS | 75 µm | 50 µm | 50 µm |
| PRISM LAYER | PITCH | 100 µm | 24 µm | 24 µm |
| | HEIGHT | 50 µm | 12 µm | 12 µm |
| | APEX ANGLE | 90° | 90° | 90° |
| TOTAL THICKNESS | | 169 µm | 83 µm | 82 µm |
| BRIGHTNESS | | 126.0% | 121.8% | 123.8% |

### <Materials and refractive indices of inverted pyramid layer and prism layer>

Table 3 shows the effects of differences in the materials with respect to the light-refracting sheet 44 having the same shape (the pitches p, heights h and apex angles θ of the inverted pyramid layer 62 and the prism layer 63, and the thickness of the base material layer 61) as in example 6.

More specifically, the light-refracting sheet 44 was prepared using PET or PC as the base material layer 61 and using three types of resin materials having refractive indices of 1.5, 1.58 and 1.65, respectively, to form the inverted pyramid layer 62 and the prism layer 63. Table 3 shows the respective brightnesses thereof. It should be noted that the refractive indices are values at a wavelength of 589 nm.

Here, the refractive index of polyethylene terephthalate is around 1.5, and the refractive index of polycarbonate is around 1.6.

As shown on Table 3, from the viewpoint of brightness improvement, the difference between the refractive indices of the base material layer 61 and the prism layer 63 is preferably small. The improvement in the brightness is excellent when the base material layer 61 is made of PC and the refractive index of the resin material is 1.58, i.e., close to the refractive index of the base material layer 61. Similarly, the improvement in the brightness is excellent when the base material layer 61 is made of PET and the refractive index of the resin material is 1.5, i.e., close to the refractive index of the base material layer 61.

**[Table 3]**

| | | | |
|---|---|---|---|
| REFRACTIVE INDEX OF RESIN | 1.5 | 1.58 | 1.65 |
| BASE MATERIAL LAYER PET | 126.3 % | 102.9 % | 114.1 % |
| BASE MATERIAL LAYER PC | 126.7 % | 131.1 % | 128.5 % |

### <Light-diffusing layer>

Examples of configurations of the first light-diffusing sheet 45 and the second light-diffusing sheet 46 constituting the light-diffusing layer are shown on Table 4.

Likewise in the light-diffusing sheets 45 and 46, the pitch p, the height h, and the apex angle θ of the formed prism shapes may be assumed to be the same as those of FIG. 6. The thickness is a total thickness combining the thicknesses of the prism part, the film on which the prisms are formed, and so on.

The brightness was measured using light-diffusing sheets of configuration A and configuration B, illustrated below, and using an identical component to that of FIG. 6 as the light-refracting sheet 44.

In configuration A, with regard to the second light-diffusing sheet 46 on the upper side in FIG. 2, the thickness is 100 µm, the pitch p is 24 µm, the height h is 11.5 µm, the apex angle θ is 90°, and the estimated refractive index is 1.7 at a wavelength of 450 nm and 1.68 at a wavelength of 532 nm. With regard to the first light-diffusing sheet 45 on the lower side, the thickness is 75 µm, the pitch p is 24 µm, the height h is 11.5 µm, the apex angle θ is 90°, and the estimated refractive index is 1.68 at a wavelength of 450 nm and 1.65 at a wavelength of 532 nm. In this configuration, the brightness was 113.1%.

In configuration B, with regard to the second light-diffusing sheet 46, the thickness is 95 µm, the pitch p is 24 µm, the height h is 12 µm, the apex angle θ is 90°, and the estimated refractive index is 1.67 at a wavelength of 450 nm and 1.64 at a wavelength of 532 nm. With regard to the first light-diffusing sheet 45, the thickness is 65 µm, the pitch p is 24 µm, the height h is 12 µm, the apex angle θ is 90°, and the estimated refractive index is 1.68 at a wavelength of 450 nm and 1.64 at a wavelength of 532 nm. In this configuration, the brightness was 126.3%.

From the viewpoint of brightness improvement, the refractive index of the light-refracting sheet 44 is preferably smaller than the refractive index of the light-diffusing sheet. The refractive index difference is preferably 0.05 or more and around 0.18.

Note that the "estimated refractive index" is a refractive index calculated from the shape of the prism and the angle of the light emitted from the light-diffusing sheet.

**[Table 4]**

| | | THICKNE SS (µm) | PITCH (µm) | HEIGHT (µm) | APEX ANGLE (°) | ESTIMATE D REFRACTI VE INDEX (450 nm) | ESTIMATE D REFRACTI VEINDEX (532 nm) | BRIGHTNE SS (%) |
|---|---|---|---|---|---|---|---|---|
| CONFIGURATI ON A | UPPER (SECON D) | 100 | 24 | 11.5 | 90 | 1.7 | 1.68 | 113.1 |
| | LOWER (FIRST) | 75 | 24 | 11.5 | 90 | 1.68 | 1.65 | |
| CONFIGURATI ON B | UPPER (SECON D) | 95 | 24 | 12 | 90 | 1.67 | 1.64 | 126.3 |
| | LOWER (FIRST) | 65 | 24 | 12 | 90 | 1.68 | 1.64 | |

### <Configuration for preventing Moire>

In the backlight unit 40 of this embodiment, Moire may occur on the light emission surface, leading to a reduction in brightness uniformity. Figs. 7 and 8 show an example configuration of the prism layer 63 for suppressing this. It should be noted that Moire may occur due to, for example, the dimensional relationships of the respective parts of the light guide plate 43, the light-refracting sheet 44, the light-emitting layer, and so on. In the backlight unit 40 of this embodiment, the following configuration is not essential for achieving light emission without Moire.

In FIG. 7, the groove lines in the prism layer 63 of the light-refracting sheet 44 and the prisms 64 left by the groove lines are formed in the shape of a repeatedly curved wave. As a result, the ridge lines 44b also become wave-shaped.

In FIG. 8, the extension direction of the groove lines and the prisms 64 (the ridge lines 44b) is not parallel to the emission direction of the light 48 from the light source layer 47 (indicated by an upward arrow), but forms an angle of, for example, around 5° to 10°. Note that likewise in this case, the angle between the ridge lines 44a of the inverted pyramid layer 62 and the ridge lines 44b of the prism layer 63 is preferably 45°. In comparison with the desired configuration illustrated in FIG. 2, the structure of the light-refracting sheet 44 itself is the same, but the light-refracting sheet 44 is used at a slight rotation (5° to 10°, for example).

Thus, the occurrence of Moire can be suppressed and the brightness uniformity can be improved.

### <Other configurations>

A brightness improvement effect can also be achieved when the light-refracting sheet 44 is turned upside-down from FIG. 2 so that the inverted pyramid layer 62 faces the light source layer 47 side. However, the effect is more pronounced when the prism layer 63 faces the light source layer 47 side, as described above.

### Industrial Applicability

According to the technology of the present disclosure, uniform and high-brightness light emission is realized, and therefore the technology of the present disclosure is useful as an edge light type backlight unit, as well as a liquid crystal display device and an information apparatus using the edge light type backlight unit.

### Reference Signs List

- 1: TFT substrate
- 2: CF substrate
- 3: Liquid crystal layer
- 5: Liquid crystal display panel
- 6: First polarizing plate
- 7: Second polarizing plate
- 40: Backlight unit
- 41: Light source
- 42: Reflective sheet
- 43: Light guide plate
- 43a: Lenticular lens
- 44: Light-refracting sheet
- 44a: Ridge line
- 44b: Ridge line
- 44c: Recess
- 44e: Center (of recess)
- 45: First light-diffusing sheet
- 45a: Ridge line
- 45b: Ridge line
- 46: Second light-diffusing sheet
- 47: Light source layer
- 48: Light
- 50: Liquid crystal display device
- 50a: Display screen
- 61: Base material layer
- 62: Inverted pyramid layer
- 63: Prism layer
- 64: Prism
- 65: Remaining portion

## Claims

1. An edge light type backlight unit comprising:
a light guide plate configured to guide light entering through one end portion to an end portion side on the opposite side;
a light-refracting sheet stacked on one surface of the light guide plate; and
a light-diffusing layer stacked on the light-refracting sheet,
wherein a first surface of the light-refracting sheet includes a plurality of recesses formed in an inverted substantially polygonal pyramid shape or an inverted substantially polygonal truncated pyramid shape, and
a second surface of the light-refracting sheet includes a plurality of groove lines formed adjacent to each other and having an isosceles triangle-shaped cross-section.

2. The edge light type backlight unit according to claim 1,
wherein the groove lines provided in the second surface of the light-refracting sheet are parallel to the direction of the light entering the light guide plate.

3. The edge light type backlight unit according to claim 1 or 2,
wherein the recesses provided in the first surface of the light-refracting sheet are formed in an inverted substantially square pyramid shape or a substantially square truncated pyramid shape with a rectangular or square base, and
ridge lines partitioning the adjacent recesses form an angle of 30° or more and 60° or less with respect to the direction of the light entering the light guide plate.

4. The edge light type backlight unit according to claim 1 or 2,
wherein the light-diffusing layer includes a first light-diffusing sheet and a second light-diffusing sheet, the first light-diffusing sheet being located closer to the light guide plate side than the second light-diffusing sheet,
each of the first light-diffusing sheet and the second light-diffusing sheet includes a plurality of groove lines formed adjacent to each other on a surface on the opposite side to the light guide plate and having an isosceles triangle-shaped cross-section,
the groove lines in the first light-diffusing sheet are orthogonal to the direction of the light entering the light guide plate, and
the groove lines in the second light-diffusing sheet are parallel to the direction of the light entering the light guide plate.

5. The edge light type backlight unit according to claim 1 or 2,
wherein the second surface of the light-refracting sheet is on the light guide plate side.

6. The edge light type backlight unit according to claim 1 or 2,
wherein an apex angle of the recesses formed in the light-refracting sheet is 80° or more and 100° or less.

7. The edge light type backlight unit according to claim 1,
wherein the groove lines provided in the second surface of the light-refracting sheet form an angle of 5° or more and 10° or less with respect to the direction of the light entering the light guide plate.

8. The edge light type backlight unit according to claim 1,
wherein the groove lines provided in the second surface of the light-refracting sheet are formed in a repeatedly curved wave shape.

9. A liquid crystal display device comprising:
the edge light type backlight unit according to claim 1; and
a liquid crystal display panel.

10. An information apparatus comprising the liquid crystal display device according to claim 9.
